# EUROPÄISCHE PATENTSCHRIFT

(11) **EP 1 167 944 B1**
(45) Veröffentlichungstag und Bekanntmachung des Hinweises auf die Patenterteilung: **28.12.2016**
(21) Anmeldenummer: 01114930.9
(22) Anmeldetag: 20.06.2001
(51) Int. Cl.: G01M 17/06, G01B 5/255

(54) **Haltevorrichtung zum Anbringen mindestens eines Messelementes an einem Fahrzeugrad**
Holding device for applying at least a measuring element on a vehicle wheel
Dispositif de maintien pour appliquer au moins un élément de mesure sur une roue de véhicule

(30) Priorität: 30.06.2000 DE 10031918
(43) Veröffentlichungstag der Anmeldung: 02.01.2002
(73) Patentinhaber: ROBERT BOSCH GMBH, 70442 Stuttgart (DE)
(72) Erfinder: Neuendorf, Michael, 73734 Esslingen (DE)

(56) Entgegenhaltungen:
- DE-A- 1 473 794
- DE-A- 4 133 418
- US-A- 2 581 630
- US-A- 4 285 136
- US-A- 4 884 933
- US-A- 5 552 759
- US-A- 6 048 068

## Beschreibung

### Stand der Technik

Die Erfindung bezieht sich auf eine Haltevorrichtung zum Anbringen mindestens eines Messelementes, insbesondere eines Sensors, Sensorelements oder einer Messmarke, an einem Fahrzeugrad.

Um Messungen an der Fahrwerksgeometrie von Kraftfahrzeugen, wie z.B. Bestimmung von Spur oder Sturz, durchführen zu können, müssen Messelemente, wie Sensoren, Elemente von Sensoren oder Messmarken an den Fahrzeugfelgen angebracht werden. Außer einfachen, leichten Messmarken bzw. aktiven oder passiven Sensorelementen kommen auch etwas aufwendigere Sensoren oder Sensorteile, wie z.B. Beleuchtungseinheiten in Form von Laserlichtquellen oder dgl. in Betracht. Bei (ohne druckschriftlichen Beleg) bekannten bisherigen Haltevorrichtungen bzw. Radadaptern dieser Art wird dieser mittels Spannelemente von Innen oder Außen auf das Felgenhorn gespannt. Bei einer anderen Ausführungsform stützt sich der Radadapter im Umfangsbereich der Felge ab und wird mittels Bügeln, die in das Reifenprofil der Lauffläche greifen, gegen die Felge verspannt. Diese Haltevorrichtungen sind relativ aufwendig. Auch kann es vorkommen, dass die Felge durch die Befestigungselemente verkratzt wird. Greifen Bügel um den Reifen, so kann eine häufig erwünschte Messung während der Fahrt nich vorgenommen werden.

Haltevorrichtung ist offenbart in DE 197 30 523, DE 198 55 392 oder US 4 884 933.

Der Erfindung liegt die Aufgabe zugrunde, eine Haltevorrichtung der eingangs genannten Art bereit zu stellen, die bei einfachem Aufbau universell für Fahrzeugfelgen einsetzbar ist.

Diese Aufgabe wird mit den Merkmalen des Anspruches 1 gelöst. Die Haltevorrichtung zeichnet sich durch mindestens ein Steckteil aus, das einen Steckansatz zum passgenauen Aufstecken auf eine Radmutter und Ausüben einer Haltekraft in axialer Richtung der Radmutter aufweist.

Mittels Formschlusses und gegebenfalls Kraftschlusses wird ein im Wesentlichen spielfreier Sitz in Querrichtung der Radmutter gewährleistet, während die Haltekraft in axialer Richtung zumindest für niedrige Drehgeschwindigkeiten des Rades sicherstellt, dass die Haltevorrichtung positionsgenau an dem Rad gehalten wird, sowie die Haltekraft von einem in dem Steckansatz vorgesehenen Magnet bewirkt ist.

Eine stabile, kraftschlüssige Anbringung kann dadurch erreicht werden, dass die Klemmverbindung mittels eines an dem Steckansatz auf dessen von der Radmutter abliegenden Seite ausgebildeten Spannkonus und eines mit diesem zusammenwirkenden, auf den Steckansatz aufschraubbaren Spannglieds und/oder mittels elastischer Ausbildung des Steckansatzes gebildet ist. In axialer Richtung wirkt dabei eine entsprechend große Reibkraft. Mittels des Spannkonus kann eine besonders hohe Haltekraft bewirkt werden. Der Steckansatz kann ganz oder teilweise aus Metall, Kunststoff oder einem steifen Gummi bestehen.

Für eine einfache Handhabbarkeit und einfache Anbringung von Messelementen sind die Maßnahmen vorteilhaft, dass das Spannglied hülsenförmig ausgebildet ist und ein Innengewinde aufweist, mit dem es auf einen von der Radmutter weg gerichteten, mit einem Außengewinde versehenen Koppelabschnitt des Steckteils aufschraubbar ist, wobei eine Schräge auf der Innenseite des zur Radmutter zeigenden freien Endabschnitts des Spannglieds mit dem Spannkonus zusammenwirkt. Beispielsweise können einfache Spannglieder von vornherein mit unterschiedlichen Messelementen versehen sein oder an den Spanngliedern können die Messelemente über geeignete Zwischenstücke angebracht werden.

Zum einfachen Aufstecken und Herstellen der Klemmverbindung ist es günstig, dass in dem Steckansatz achsparallele, an dem der Radmutter zugekehrten freien Ende offene, sich diametral gegenüber liegende Klemmschlitze vorhanden sind.

Ist vorgesehen, dass das Spannglied an seinem von der Radmutter abgelegenen Endabschitt mit einem Kopfteil versehen ist, so kann das Spannglied leicht von Hand fest verspannt werden. Außerdem kann der Kopfteil zur Anbringung der Messelemente genutzt werden.

Die Anbrigung mehrerer Messelemente kann leicht dadurch vorgenommen werden, dass mehrere Steckteile zum Aufstecken auf verschiedenen Radmuttern eines Rades sowie ein im Wesentlichen parallel zur Drehebene des Rades an den Steckteilen mittelbar oder unmittelbar anbringbarer Träger vorgesehen sind, auf dem mindestens ein Messelement ausgebildet oder aufgenommen ist. Dabei ist es günstig, den Träger radial über die Radmuttern hinaus zu verlängern, um einen vergrößerten Hebel zum Anordnen der Messelemente zu erhalten, mit dem die Genauigkeit z.B. der optischen Achsvermessung erhöht werden kann.

Eine einfache Anbringung mit z.B. drei Steckteilen bzw. daran angebrachten Spanngliedern an Felgen mit unterschiedlicher Lochzahl wird dadurch erreicht, dass der Träger plattenförmig ausgebildet ist und mehrere in Umfangsrichtung entsprechend üblicher Winkelabstände von Radmuttern verteilte und von der Drehachse in üblicher Entfernung der Radmuttern beabstandete, radial gerichtete Langlöcher aufweist, durch die Schraubbolzen von Befestigungsschrauben zum Festlegen des Trägers unmittelbar an dem Steckteil oder an dem Spannglied führbar sind.

Eine alternative Möglichkeit zum Anbringen des Trägers besteht darin, dass der Träger mittels einer Klettenverbindung unmittelbar an dem Steckteil oder an dem Spannglied festgelegt ist.

Weitere Alternativen sind z.B. Klemmverbindung oder Magnetverbindung. Bei der Klemmverbindung sind die Langlöcher im Träger elastisch aufgebaut, z.B. durch ein in den Träger eingesetztes Gummielement.

Auf dem von der Radmutter abgekehrten Ende vom Kopfteil des Spanngliedes ragt ein Bolzen heraus. Auf diese Bolzen wird der Träger geklemmt.

Weitere Vorteile der vorliegenden Haltevorrichtung sind, dass dieser ohne weitere Messungen an Fahrzeugen während der Fahrt ermöglicht, weil eine stabile Befestigung erzielt wird und sich das Rad ungehindert drehen kann. Die Gefahr eines Verkratzens des Felgenhorns durch Spannelemente ist ausgeschlossen. Die universell für verschiedene Fahrzeugfelgen einsetzbare Haltevorrichtung ist kostengünstig.

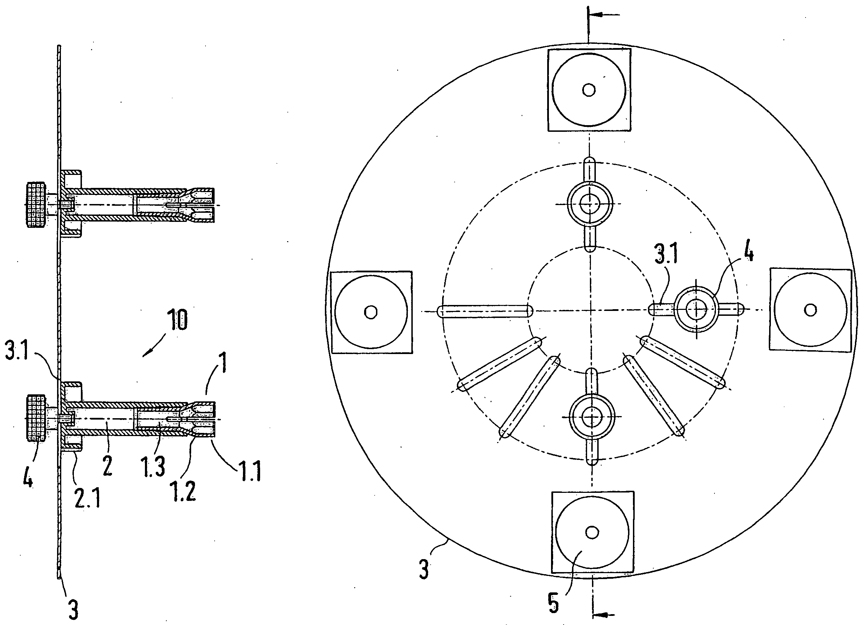

Die Erfindung wird anhand eines Ausführungsbeispiels unter Bezugnahme auf die Zeichnung näher erläutert. Die Fig. zeigt eine Haltevorrichtung in Draufsicht und in einem Querschnitt.

Die Haltevorrichtung 10 weist mindestens ein Steckteil 1 auf, das mit einem Steckansatz 1.1 auf eine Radmutter bzw. den Kopf einer Radschraube aufsteckbar und unter Form- und Kraftschluss gehalten ist, so dass sich in Querrichtung ein spielfreier Sitz ergibt und das Steckteil 1 in axialer Richtung mit der für die Anwendung erforderlichen Kraft, insbesondere Klemmkraft und/oder Magnetkraft gehalten ist. Bei vorliegendem Ausführungsbeispiel sind drei Steckteile 1 mit darauf aufgeschraubten Spanngliedern 2 vorgesehen, auf denen ein plattenförmiger Träger 3 mittels Befestigungselementen 4 in Form von Kordelschrauben befestigt ist, wobei der Träger 3 auf einem jeweiligen Kopfteil 2.1 der Spannglieder 2 flach aufliegt und die Kordelschraube in den Kopfteil 2.1 eingeschraubt ist. Auf der von einem (nicht gezeigten) Fahrzeugrad abgekehrten Seite sind auf dem Träger 3 mehrere Messelemente 5, z.B. Messmarken, Sensoren oder Sensorelemente, wie z.B. magnetische oder optische Elemente, radial außerhalb der Lage der Radmuttern angebracht, so dass für die Messelemente ein relativ langer, für eine genaue Messung günstiger Hebel erzielt wird.

Der Steckansatz 1.1 weist zum einfachen Aufstecken und Erzielen einer guten Klemmwirkung zwei sich diametral gegenüberliegende Klemmschlitze 1.4 auf. An einen Steckabschnitt, von dem freien Ende bzw. der Radmutter abgekehrt, schließt sich ein nach außen verjüngter Spannkonus 1.2 an, der in einen zylinderförmigen, auf seiner Außenseite mit einem Gewinde versehenen Koppelabschnitt 1.3 übergeht. Das Spannglied 2 ist als rohrförmige Hülse mit einem Innengewinde ausgebildet, das mit dem Außengewinde des Koppelabschnitts 1.3 zusammenwirkt und an seinem der Radmutter zugekehrten freien Ende auf der Innenseite abgeschrägt bzw. angefast ist, so dass es beim Aufschrauben auf das Steckteil 1 im Zusammenwirken mit dem Spannkonus 1.2 eine stabile Klemmkraft des Steckansatzes 1.1 auf einer Radmutter bzw. Radschraube bewirkt und eine kraftschlüssige Steckverbindung nach Art einer Spannzange gebildet wird. Der Kopfteil 2.1 des Spannglieds 2 ist zur manuellen Betätigung vorteilhaft als Sterngriff ausgebildet, so dass sich beim Drehen des Spannglieds 2 der auf die Radmutter bzw. die Radschraube aufgesteckte Steckansatz 1.1 in die Hülse des Spannglieds 2 hineinbewegt.

Auf dem Kopfteil 2.1 der Spannglieder 2 können alternativ zur Anbringung auf dem Träger 3 geeignete Messelemente auch unmittelbar angebracht werden. Beispielsweise können die Kopfteile 2.1 von vornherein auch als Messköpfe ausgebildet sein.

Es ist auch denkbar, die Steckteile 1 außer aus Metall, aus einem geeigneten Kunststoff oder steifen Gummi oder einer Kombination aus diesen Materialien herzustellen und die Klemmkraft durch die Elastizität des Materials zu bewirken. Für verschiedene Durchmesser von Radschrauben bzw. Radmuttern sind entsprechende Steckteile 1 vorgesehen, die z.B. unterschiedlich eingefärbt sein können.

Der vorliegend plattenförmige Träger 3 weist mehrere, z.B. acht radial gerichtete Langlöcher auf, deren Winkelabstände in Umfangsrichtung so gewählt sind, dass der Träger 3 in Verbindung mit Lochfelgen unterschiedlicher Lochzahl, z.B. Drei-, Vier-, Fünf- und Sechslochfelgen verwendet werden kann.

Die Haltevorrichtung mit dem beschriebenen Befestigungsprinzip eignet sich nicht nur für optische Messelemente, sondern natürlich auch für andere Sensoren. Die Trägerplatte kann alternativ auch mit einem Klettenband, einer Klemmverbindung oder Magnetverbindung an dem Kopfteil 2.1 des Spannglieds 2 befestigt werden. Insbesondere kleine und leichte Sensoren lassen sich direkt auf die Radschrauben stecken, wozu sich die erwähnte elastische Klemmverbindung eignet.

## Patentansprüche

1. Haltevorrichtung zum Anbringen mindestens eines Messelementes (5), insbesondere eines Sensors, Sensorelements oder einer Messmarke, an einem Fahrzeugrad, wobei mindestens ein Steckteil (1) und ein Spannglied (2) vorgesehen ist, wobei das Steckteil (1) einen Steckansatz (1.1) zum passgenauen Aufstecken auf eine Radmutter oder den Kopf einer Radschraube und Ausüben einer Haltekraft in axialer Richtung der Radmutter aufweist, wobei mehrere Steckteile (1) zum Aufstecken auf verschiedenen Radmuttern bzw. Radschrauben eines Rades sowie ein im Wesentlichen parallel zur Drehebene des Rades an den Steckteilen (1) mittelbar oder unmittelbar anbringbarer Träger (3) vorgesehen sind, auf dem mindestens ein Messelement (5) ausgebildet oder aufgenommen ist, **dadurch gekennzeichnet, dass** die Haltekraft in axialer Richtung von einem in dem Steckansatz (1.1) vorgesehenen Magneten bewirkt ist, wobei der Steckansatz (1.1) unter Form- und Kraftschluss gehalten ist und sich in Querrichtung ein spielfreier Sitz ergibt.

2. Haltevorrichtung nach Anspruch 1, **dadurch gekennzeichnet,**
**dass** das Spannglied (2) hülsenförmig ausgebildet ist und ein Innengewinde aufweist, mit dem es auf einen von der Radmutter weggerichteten, mit einem Außengewinde versehenen Koppelabschnitt (1.3) des Steckteils (1) aufschraubbar ist, wobei eine Schräge auf der Innenseite des zur Radmutter zeigenden freien Endabschnitts des Spannglieds (2) mit dem Spannkonus (1, 3) zusammenwirkt.

3. Haltevorrichtung nach Anspruch 1, **dadurch gekennzeichnet,**
**dass** in dem Steckansatz (1.1) achsparallele, an dem der Radmutter zugekehrten freien Ende offene, sich diametral gegenüberliegende Klemmschlitze (1.4) vorhanden sind.

4. Haltevorrichtung nach Anspruch 1, **dadurch gekennzeichnet,**
**dass** das Spannglied (2) an seinem von der Radmutter abgelegenen Endabschnitt mit einem Kopfteil (2.1) versehen ist.

5. Haltevorrichtung nach Anspruch 1, **dadurch gekennzeichnet,**
**dass** der Träger (3) mehrere in Umfangsrichtung entsprechend üblicher Winkelabstände von Radmuttern verteilte und von der Drehachse in üblicher Entfernung der Radmuttern beabstandete, radial gerichtete Langlöcher aufweist, durch die Schraubbolzen von Befestigungsschrauben zum Festlegen des Trägers (3) unmittelbar an dem Steckteil (1) oder an dem Spannglied (2) führbar sind.

## Claims

1. Holding device for applying at least one measuring element (5), in particular a sensor, sensor element or a measuring mark, to a vehicle wheel, wherein at least one plug-in part (1) and a clamping member (2) are provided, wherein the plug-in part (1) has a plug-in attachment (1.1) for the precise-fitting attachment to a wheel nut or to the head of a wheel bolt and for inserting a holding force in the axial direction of the wheel nut, wherein a plurality of plug-in parts (1) are provided for attaching to various wheel nuts or wheel bolts of a wheel, and also a carrier (3) is provided, which carrier can be mounted indirectly or directly on the plug-in part (1) substantially parallel to the plane of rotation of the wheel and on which at least one measuring element (5) is formed or accommodated, **characterized in that** the holding force is brought about in the axial direction by a magnet provided in the plug-in attachment (1.1), wherein the plug-in attachment (1.1) is held with a form fit and force fit, and a play-free fit is produced in the transverse direction.

2. Holding device according to Claim 1, **characterized in that** the clamping member (2) is designed in the shape of a sleeve and has an internal thread with which said clamping member can be screwed onto a coupling portion (1.3) of the plug-in part (1), which coupling portion is directed away from the wheel nut and is provided with an external thread, wherein an inclination on the inside of the free end portion which points towards the wheel nut interacts with the clamping cone (1, 3).

3. Holding device according to Claim 1, **characterized in that** axially parallel, diametrically opposite clamping slots (1.4) which are open at the free end facing the wheel nut are present in the plug-in attachment (1.1).

4. Holding device according to Claim 1, **characterized in that** the clamping member (2) is provided with a head part (2.1) on its end portion remote from the wheel nut.

5. Holding device according to Claim 1, **characterized in that** the carrier (3) has a plurality of radially directed elongate holes which are distributed in the circumferential direction in a manner corresponding to customary angular spacings of wheel nuts, are spaced apart from the axis of rotation at the customary distance of the wheel nuts and through which threaded bolts of fastening screws for securing the carrier (3) directly on the plug-in part (1) or on the clamping member (2) can be guided.

## Revendications

1. Dispositif de maintien pour appliquer au moins un élément de mesure (5), en particulier un capteur, un élément de capteur ou une marque de mesure, sur une roue de véhicule, au moins une partie d'enfichage (1) et un organe de serrage (2) étant prévus, la partie d'enfichage (1) présentant un insert d'enfichage (1.1) pour l'enfichage en position exacte sur un écrou de roue ou sur la tête d'une vis de roue et pour exercer une force de maintien dans la direction axiale de l'écrou de roue, plusieurs pièces d'enfichage (1) étant prévues pour l'enfichage sur différents écrous de roue ou différentes vis de roue d'une roue ainsi qu'un support (3) pouvant être monté de manière directe ou indirecte essentiellement parallèlement au plan de rotation de la roue sur les parties d'enfichage (1), sur lequel support est réalisé ou reçu au moins un élément de mesure (5), **caractérisé en ce que** la force de maintien est appliquée dans la direction axiale par un élément prévu dans l'insert d'enfichage (1.1), l'insert d'enfichage (1.1) étant maintenu par engagement par correspondance de formes et par force et un ajustement sans jeu étant obtenu dans la direction transversale.

2. Dispositif de maintien selon la revendication 1, **caractérisé en ce que** l'organe de serrage (2) est réalisé en forme de douille et présente un filetage interne avec lequel il peut être vissé sur une portion d'accouplement (1.3) de la partie d'enfichage (1) pourvue d'un filetage extérieur et orientée à l'écart de l'écrou de roue, un biseau sur le côté intérieur de la portion d'extrémité libre de l'organe de serrage (2), tournée vers l'écrou de roue, coopérant avec le cône de serrage (1, 3).

3. Dispositif de maintien selon la revendication 1, **caractérisé en ce que** des fentes de serrage (1.4) d'axes parallèles, diamétralement opposées, ouvertes au niveau de l'extrémité libre tournée vers l'écrou de roue, sont prévues dans l'insert d'enfichage (1.1).

4. Dispositif de maintien selon la revendication 1, **caractérisé en ce que** l'organe de serrage (2) est pourvu d'une partie de tête (2.1) au niveau de sa portion d'extrémité éloignée de l'écrou de roue.

5. Dispositif de maintien selon la revendication 1, **caractérisé en ce que** le support (3) présente plusieurs trous oblongs répartis dans la direction périphérique de manière correspondant à des écarts angulaires usuels d'écrous de roue, orientés radialement et espacés de l'axe de rotation suivant l'éloignement usuel des écrous de roue, à travers lesquels peuvent être guidés des boulons de vissage de vis de fixation pour la fixation du support (3) directement à la partie d'enfichage (1) ou à l'organe de serrage (2).
